(19) **Europäisches Patentamt / European Patent Office / Office européen des brevets**

(11) **EP 4 604 417 A1**

(12) # EUROPEAN PATENT APPLICATION

(43) Date of publication:
20.08.2025 Bulletin 2025/34

(21) Application number: 25155611.4

(22) Date of filing: 03.02.2025

(51) International Patent Classification (IPC):
*H04B 7/185* (2006.01)

(52) Cooperative Patent Classification (CPC):
H04B 7/18513

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 13.02.2024 KR 20240020672
20.06.2024 KR 20240080588

(71) Applicant: Samsung Electronics Co., Ltd.
Suwon-si, Gyeonggi-do 16677 (KR)

(72) Inventors:
- CHONG, Dahae
  16677 Suwon-si (KR)
- KIM, Beomkon
  16677 Suwon-si (KR)
- DO, Joohyun
  16677 Suwon-si (KR)
- PARK, Jinwoong
  16677 Suwon-si (KR)
- SIM, Yujin
  16677 Suwon-si (KR)

(74) Representative: Marks & Clerk LLP
15 Fetter Lane
London EC4A 1BW (GB)

(54) **USER EQUIPMENT AND OPERATION METHOD OF USER EQUIPMENT TO IMPROVE FREQUENCY SEARCH SPEED**

(57) Provided is an operation method of user equipment, the operation method including receiving a received signal including a frequency offset and a shared signal transmitted from a satellite, generating a plurality of correlation values, by correlating a search signal corresponding to the shared signal with the received signal, for each of a plurality of predefined reference frequencies, selecting a first detection window comprising a largest correlation value, among a plurality of detection windows including the plurality of correlation values corresponding to each of the plurality of reference frequencies, and identifying a target frequency for communicating with the satellite by searching a frequency band corresponding to a search width of the first detection window.

## FIG. 1

1

EP 4 604 417 A1

**Description**

BACKGROUND

The disclosure relates to user equipment and an operation method of the user equipment, and more particularly, to user equipment and an operation method of the user equipment to improve search speed for a frequency at which a signal including a frequency offset is present by searching a wide frequency band with a small number of searches.

Satellite communication systems are being researched and developed to overcome the limitations in coverage of terrestrial networks. The satellite communication systems are expected to provide low-capacity data, voice, and video streaming services to users through satellite in areas where it is difficult to provide services through existing terrestrial networks.

In a case in which user equipment searches for a frequency at which a signal is present to access a satellite communication system, a frequency offset may be included in the signal received from the satellite due to the speed of the satellite and the distance between the user equipment and the satellite communication system. Due to the effect of frequency offset, the frequency at which the received signal is present may differ from a preset reference frequency. Therefore, it may take a long time to search for a frequency at which the received signal is present and a method of improving the search speed for a frequency at which the received signal is present is required.

SUMMARY

Example aspects of the disclosure provide user equipment which searches for a frequency at which a received signal is present by selecting a frequency band with a high probability of including the frequency at which the received signal is present, based on a search signal configured to generate a detection window corresponding to each of a plurality of preset reference frequencies, and performing a frequency search for the frequency band, and an operation method of the user equipment.

The disclosure is not limited to the features mentioned above, and other embodiments and/or inventive concepts not mentioned may be clearly understood by those skilled in the art from the description below.

According to an aspect of the disclosure, there is provided an operation method of user equipment, the operation method including: receiving a signal from a satellite, the received signal including a frequency offset and a shared signal; generating, for each of a plurality of reference frequencies, a plurality of correlation values based on a search signal corresponding to the shared signal and the received signal; selecting a first detection window, among a plurality of detection windows including the plurality of correlation values corresponding to each of the plurality of reference frequencies, the first detection window including a largest correlation value among the plurality of correlation values corresponding to each of the plurality of reference frequencies; and identifying a target frequency for communicating with the satellite by searching a frequency band based on the first detection window.

According to another aspect of the disclosure, there is provided user equipment including: a transceiver configured to receive a signal from a satellite, the receive signal including a frequency offset and a shared signal; a memory configured to store a plurality of reference frequencies; and a processor configured to: generate, for each of a plurality of reference frequencies, a plurality of correlation values based on a search signal corresponding to the shared signal and the received signal, and identify a target frequency for communication with the satellite by searching a frequency band based on a first detection window, among a plurality of detection windows including a plurality of correlation values corresponding to each of the plurality of reference frequencies, the first detection window including a largest correlation value among the plurality of correlation values corresponding to each of the plurality of reference frequencies.

According to another aspect of the disclosure, there is provided an operation method of user equipment including: receiving a signal from a satellite, the received signal including a frequency offset and a shared signal; generating a search signal configured such that a search width of a detection window generated by correlation with the received signal is equal to or greater than a frequency interval between a plurality of preset reference frequencies; generating, for each of a plurality of reference frequencies, a plurality of correlation values, by correlating the search signal with the received signal; selecting a first detection window, among a plurality of detection windows including the plurality of correlation values corresponding to each of the plurality of reference frequencies, the first detection window including a largest correlation value among the plurality of correlation values corresponding to each of the plurality of reference frequencies; determining a frequency band based on a first reference frequency corresponding to the first detection window and an adjacent reference frequency; and identifying a target frequency for communicating with the satellite by searching the frequency band.

At least some of the above and other features of the invention are set out in the claims.

BRIEF DESCRIPTION OF DRAWINGS

Embodiments will be more clearly understood from the following detailed description taken in conjunction with the accompanying drawings in which:

FIG. 1 is a block diagram illustrating a satellite communication network system, according to an embodiment;

FIG. 2 is a block diagram illustrating an user equipment, according to an embodiment;

FIG. 3 is a diagram illustrating a reference frequency list, according to an embodiment;

FIG. 4 is a diagram illustrating target frequency search, according to an embodiment;

FIG. 5 is a diagram illustrating target frequency search, according to an embodiment;

FIG. 6 is a diagram illustrating target frequency search, according to an embodiment;

FIG. 7 is a diagram illustrating target frequency search;

FIG. 8 is a flowchart illustrating an operation method of user equipment, according to an embodiment;

FIG. 9 is a flowchart illustrating an operation method of user equipment, according to an embodiment;

FIG. 10 is a block diagram illustrating an electronic device, according to an embodiment; and

FIG. 11 is a conceptual diagram illustrating an Internet of things (IoT) network system to which an embodiment is applied.

DETAILED DESCRIPTION

Below, embodiments of the disclosure will be described in detail and clearly to such an extent that an ordinary one in the art easily carries out the disclosure. As used herein, an expression "at least one of" preceding a list of elements modifies the entire list of the elements and does not modify the individual elements of the list. For example, an expression, "at least one of a, b, and c" should be understood as including only a, only b, only c, both a and b, both a and c, both b and c, or all of a, b, and c.

Hereinafter, embodiments are described based on a new radio (NR) network-based wireless communication system, but the disclosure is not limited to the NR network. Embodiments of the disclosure may also be applicable to other wireless communication systems, which may include, but are not limited to, cellular communication systems, global navigation satellite systems (GNSS) and short-distance communication systems. The cellular communication systems may include, but are not limited to, long term evolution (LTE), LTE-advanced (LTE-A), wireless broadband (WiBro), and global system for mobile communication (GSM). The GNSS may include, but is not limited to, global positioning system (GPS). The short-distance communication systems may include, but are not limited to, Bluetooth and near field communication (NFC)).

A wireless communication network of the wireless communication system may support communication of multiple wireless communication devices by sharing available network resources. For example, in the wireless communication network, information may be transmitted by various multiple access methods, such as code division multiple access (CDMA), frequency division multiple access (FDMA), time division multiple access (TDMA), orthogonal frequency division multiple access (OFDMA), single carrier frequency division multiple access (SC-FDMA), OFDM-FDMA, OFDM-TDMA, and OFDM-CDMA.

In addition, various functions described below may be implemented or supported by artificial intelligence technology or one or more computer programs, each of which is configured with computer-readable program code and executed on a computer-readable medium. The term "computer-readable medium" includes any type of medium that may be accessed by a computer, such as read-only memory (ROM), random-access memory (RAM), a hard disk drive, a compact disc (CD), a digital video disc (DVD), or other types of memory. A "non-transitory" computer-readable medium excludes wired, wireless, optical, or other communication links that transmit transitory electrical signals or other signals. The non-transitory computer-readable medium includes a medium in which data can be permanently stored, and a medium in which data can be stored and later overwritten, such as a rewritable optical disk or an erasable memory device.

In some embodiments described below, a hardware approach may be used as an example. For example, devices according to various embodiments may be described and illustrated in terms of blocks which carry out a described function or functions. These blocks, which may be referred to herein as managers, units, modules, hardware components, "~er" terms or the like, may be physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure. However, the disclosure is not limited thereto, and as such, the blocks, which may be referred to herein as managers, units, modules, or the like, may be software modules implemented by software codes, program codes, software instructions, or the like. The software modules may be executed on one or more processors.

Hereinafter, embodiments are described in detail with reference to the attached drawings.

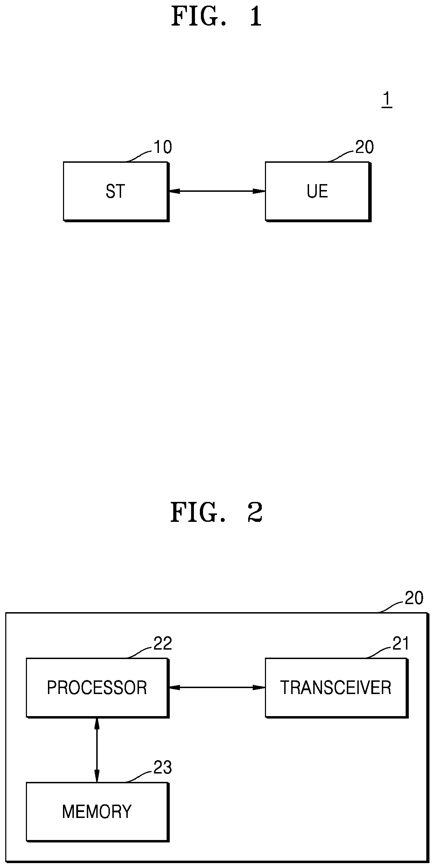

FIG. 1 is a block diagram of a satellite communication network system, according to an embodiment.

Referring to FIG. 1, a non-terrestrial network system 1 may include a satellite (ST) 10 and user equipment (UE) 20. However, the disclosure is not limited thereto, and as such, the non-terrestrial network system 1 may include one or more other components or devices.

The non-terrestrial network system 1 includes a communication network system for connecting devices on the ground and the sea to each other, and devices on the ground and in the sky to each other. The devices may include, but are not limited to, mobile devices. The non-terrestrial network system 1 may perform communication via a base station or may perform communication via the satellite 10.

The non-terrestrial network system 1 may include a non-terrestrial network (NTN) narrowband Internet of things (NB-IoT) capable of communicating at a relatively low data rate and a non-terrestrial network new radio (NTN NR) capable of communicating at a relatively high data rate. The NTN NB-IoT may have a low data transmission rate due to the communication with the satellite 10 located relatively high above the ground. For example, the satellite 10 maybe be 36,000 km away from the ground. The NTN NB-IoT may be used in emergency cases when issues arise with a terrestrial communication infrastructure. For example, in the NTN NB-IoT, the user equipment 20 may transmit and receive an emergency phone call, a short message, or the like, to and from the satellite 10. However, the disclosure is not limited thereto, and as such, NTN NB-IoT may be used may be used in other cases. In the NTN NR, the user equipment 20 may be connected to the satellite 10 located relatively low, (e.g., a low Earth orbit satellite) to perform voice calls, video calls, and the like.

The satellite 10, according to an embodiment, may relay communication between the base station and the user equipment 20. In an example case in which the user equipment 20 is included in a cellular system, the satellite 10 may receive data from the base station through a link and transmit a downlink signal to the user equipment 20 through the link. The base station may include a network infrastructure that provides wireless access to the user equipment 20. The base station may have a coverage defined as a certain geographic area, based on a distance over which signals may be transmitted to the user equipment 20 The base station may be replaced with an access point (AP), an eNodeB (eNB), a 5th generation (5G) node, a wireless point, or other terms having a technical meaning equivalent thereto, in addition to a base station.

The user equipment 20, as a device used by a user, may perform communication with the base station via a wireless channel. The user equipment 20 may be replaced with a mobile station, a subscriber station, customer premises equipment (CPE), a remote terminal, a wireless terminal, a user device, or other terms having a technical meaning equivalent thereto, in addition to a terminal. In some cases, the user equipment 20 may be referred to as UE.

The satellite 10 and the user equipment 20, according to an embodiment, may directly communicate with each other without using the base station. For example, to cope with an emergency that may occur in an example case in which the user equipment 20 is located in a shaded area of the cellular system, the user equipment 20 and the satellite 10 may communicate directly with each other without using the base station.

In an example case in which the satellite 10 communicates with the user equipment 20, a signal received by the user equipment 20 may include noise, based on the location of the satellite 10 or the like. For the sake of convenience, the signal received by the user equipment 20 may be referred to as a received signal. The noise included in the received signal received by the user equipment 20 from the satellite 10 may be greater than noise generated in general wireless communication (e.g., terrestrial wireless communication). For example, the satellite 10 may include a satellite in geosynchronous orbit or geostationary orbit. Since the satellite in geosynchronous orbit or geostationary orbit is located high above the ground, a delay time of several hundred milliseconds or more may occur in communication between the user equipment 20 and the satellite 10. Additionally, as the satellite 10 moves at a high speed, the received signal (e.g., a synchronization signal) received by the user equipment 20 may include noise due to Doppler shift and/or oscillator mismatch. According to an embodiment of the disclosure, a frequency change of the received signal, based on the Doppler shift or the like, is referred to as a frequency offset.

The user equipment 20 may search for a frequency at which the received signal is present to access the non-terrestrial network system 1 or a communication system corresponding to the user equipment 20. For example, to access the communication system, the user equipment 20 may perform Evolved Universal Terrestrial Radio Access (E-UTRA) absolute radio frequency channel number (EARFCN) search. The EARFCN search may refer to searching a corresponding frequency band according to the priority of a predefined frequency band number. The user equipment 20, according to an embodiment of the disclosure, may store a plurality of reference frequencies. The plurality of reference frequencies may be predefined reference frequencies. As described above, the user equipment 20, according to an embodiment of the disclosure, may search for a frequency at which the received signal is present (hereinafter, a target frequency), based on the plurality of predefined reference frequencies.

The satellite 10 may transmit, to the user equipment 20, a signal at one of the plurality of reference frequencies stored in the user equipment 20. The signal may include, but is not limited to, a synchronization signal. However, as described above, the received signal received by the user equipment 20 may not be present in the reference frequency used by the satellite 10 for transmission due to the frequency offset. In an embodiment of the disclosure, a frequency at which the received signal received by the user equipment 20 is present or is most likely to be present is referred to as the target frequency. As described above, the target frequency may be different from the reference frequency due to the frequency offset. Thus, for communicating with the satellite 10 (for example, for accessing the satellite), the user equipment 20 must identify the target frequency at which the received signal is present by performing a frequency search not only for the plurality of reference frequencies that the satellite 10 may use for signal transmission but also for a frequency band between the plurality of reference frequencies.

In the non-terrestrial network system 1, since the satellite 10 moves at a fast speed, the user equipment 20 needs to quickly search for the target frequency to use the signal transmitted by the satellite 10. However, as described above, since the number of frequencies to be searched for may increase due to the frequency offset, the frequency search time required for frequency search by the user equipment 20 may increase. Accordingly, issues may arise regarding the user equipment 20 accessing the non-terrestrial network system 1.

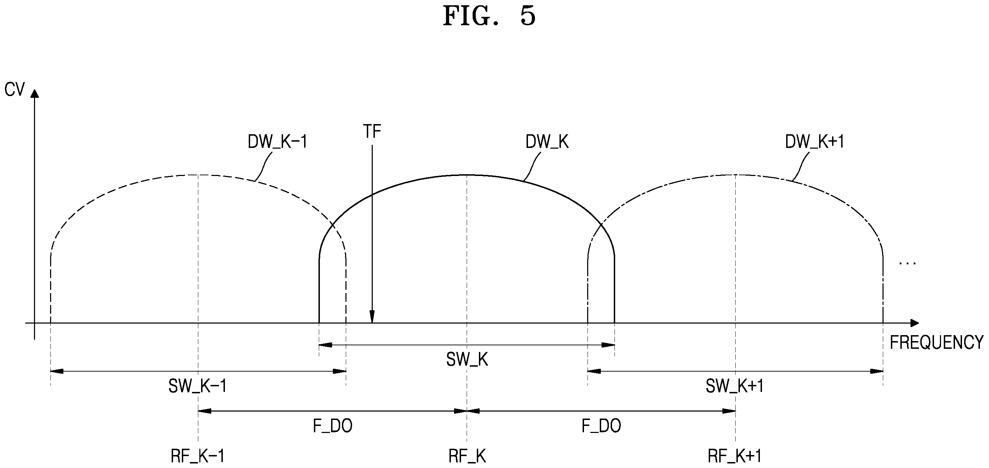

The user equipment 20, according an embodiment of to the disclosure, may reduce the frequency search time by searching for the target frequency based on a detection window capable of detecting a wide frequency band. According to an embodiment of the disclosure, the detailed operation of the user equipment 20 related thereto may be described in detail below with reference to FIG. 5.

According to an embodiment of the disclosure, the communication between the satellite 10 and the user equipment 20, the frequency offset, and the plurality of predefined reference frequencies are not limited to the examples described above. The operation method of the user equipment 20, according to an embodiment of the disclosure, described below may be applied to various cases in which the user equipment 20 searches for a frequency at which a received signal for initial access is present.

FIG. 2 is a block diagram illustrating user equipment, according to an embodiment.

Referring to FIG. 2, the user equipment 20 may include a transceiver 21, a processor 22, and memory 23. However, the disclosure is not limited thereto, and as such, according to another embodiment, the user equipment 20 may include one or more other components. The user equipment 20 may correspond to the user equipment 20 of FIG. 1. The transmission and reception of data (or signals) between the transceiver 21 and the processor 22 and between the transceiver 21 and the memory 23 may be performed for operations described below. According to an embodiment, the user equipment 20 may include one or more antennas.

The transceiver 21 may perform functions of signal transmission and reception through a wireless channel. For example, the transceiver 21 may perform a conversion function between a baseband signal and a bit string, according to the physical layer specifications of the non-terrestrial network system 1. For example, for data transmission, the transceiver 21 may generate complex symbols by encoding and modulating the transmitted bit string, and for data reception, the transceiver 21 may restore the received bit string by demodulating and decoding the baseband signal. In addition, the transceiver 21 may up-convert a baseband signal into a radio frequency (RF) band signal and transmit the same through the one or more antennas or may down-convert an RF band signal received through the one or more of antennas into a baseband signal. For example, the transceiver 21 may include, but is not limited to, a transmission filter, a reception filter, an amplifier, a mixer, an oscillator, a digital-to-analog converter (DAC), and an analog-to-digital converter (ADC). According to an embodiment, the transceiver 21 may perform beamforming. For example, to provide directionality to a signal to be transmitted to a satellite and received from the satellite, the transceiver 21 may apply a beamforming weight to the signal. The satellite may be satellite 10 in FIG. 1, and for the convenience of explanation, descriptions that are substantially the same as those given above may be omitted.

The transceiver 21 may receive a downlink signal from the satellite. The downlink signal may include, but is not limited to, a synchronization signal (SS), a reference signal (RS), system information, a configuration message, control information, or downlink data.

The user equipment 20, according to an embodiment of the disclosure, may receive a signal transmitted by the satellite. For example, the satellite may transmit a first synchronization signal (SS) to the user equipment 20 and the user equipment 20 may receive a second synchronization signal (SS) in which the first synchronization signal SS is distorted by the frequency offset through the transceiver 21. The signals transmitted and received by the user equipment 20 and the satellite according to an embodiment of the disclosure are not limited to the synchronization signals (SSs). In an embodiment of the disclosure, the signal transmitted by the satellite may be referred to as a shared signal and the signal received by the user equipment 20 may be referred to as a received signal. The shared signal refers to a signal jointly known by the user equipment 20 and the satellite. For example, the shared signal may include a narrowband primary synchronization signal (NPSS) but the disclosure is not limited thereto, as described above. The received signal may refer to a signal in which the shared signal is distorted by the frequency offset. In an embodiment of the disclosure, the received signal may be referred to as including the shared signal and the frequency offset.

According to an embodiment, the received signal may be present at a frequency (e.g., target frequency) that is separated by the frequency offset from the reference frequency used by the satellite to transmit the shared signal. However, the disclosure is not limited to the frequency at which the received signal is present. For example, the received signal may be in the vicinity of the frequency that is separated from the reference frequency by the frequency offset. That is, the target frequency may include a frequency that is separated from the reference frequency by the frequency offset or a frequency in the vicinity of a frequency separated from the reference frequency by the frequency offset.

The processor 22 may control the overall operations of the user equipment 20. For example, the processor 22 may transmit a signal to the satellite through the transceiver 21 and may receive a signal from the satellite through the transceiver 21. For example, the processor 22 may receive the received signal including the shared signal and the frequency offset through the transceiver 21. Additionally, the processor 22 may write data to the memory 23 and read data from the memory 23. For example, the processor 22 may include at least one processor or a microprocessor or may be part of a processor. In an example case in which the processor 22 is part of a processor, the processor 22 and part of the transceiver 21 may be referred to as a communication processor (CP).

The processor 22 according to an embodiment of the disclosure may generate a search signal. The search signal includes a signal configured to generate a detection window having a wide search range to reduce the frequency search time. As described below, the user equipment 20 according to an embodiment of the disclosure may search a wide frequency band a small number of times by correlating the search signal with the received signal.

The processor 22 according to an embodiment of the disclosure may generate the detection window, based on the search signal and the received signal received from the satellite. For example, for each of the plurality of preset reference frequencies, the processor 22 may generate a plurality of correlation values by correlating the search signal with the received signal. The detection window may include a plurality of correlation values corresponding to a particular reference frequency. The detection window has a frequency width, wherein the frequency width refers to a searchable frequency band. That is, the search width of the detection window may refer to a frequency band in which correlation values are present based on the correlation between the search signal and the received signal for a specific reference frequency. The detection window and the search width according to an embodiment of the disclosure may be described in more detail below with reference to FIG. 5.

The user equipment 20 according to an embodiment of the disclosure may determine a first detection window including the largest correlation value of the plurality of correlation values generated by the processor 22 and perform a detailed frequency search for a frequency band corresponding to a search width of the first detection window to identify a target frequency. For example, the detailed frequency search may be referred to as a granular frequency search in the first detection window. For example, for each of a plurality of detailed frequencies included in a first frequency band in which a first reference frequency corresponding to the first detection window is an intermediate frequency, the user equipment 20 may generate a plurality of detailed correlation values corresponding to each of the plurality of detailed frequencies, by correlating the received signal with the shared signal. For example, each of the plurality of detailed frequencies may be referred to as a plurality of sub-frequencies in first detection window. The user equipment 20 may identify a detailed frequency (or a sub-frequency) corresponding to the largest detailed correlation value among the plurality of detailed correlation values as a target frequency. The processor 22 may determine the first detection window, search for the detailed frequency in the first detection window, and identify the target frequency among the detailed frequency, as described above.

The memory 23 may store data, such as a basic program, an application program, and setting information for the operation of the user equipment 20. The memory 23 may include volatile memory, non-volatile memory, or a combination of volatile memory and non-volatile memory. In addition, the memory 23 may provide the stored data according to the request of the processor 22.

The memory 23 according to an embodiment of the disclosure may store the plurality of preset reference frequencies described above. In an embodiment of the disclosure, the plurality of reference frequencies stored in the memory 23 may be referred to as a reference frequency list. The memory 23 may transmit the reference frequency list to the processor 22 according to a request of the processor 22. The processor 22 may generate the plurality of correlation values for each of the plurality of reference frequencies, by referring to the reference frequency list received from the memory 23.

The transceiver 21, the processor 22, and the memory 23 may be included in one modem chip. Therefore, the operation method of the modem chip may be understood through the operation method of the user equipment 20 described above and below.

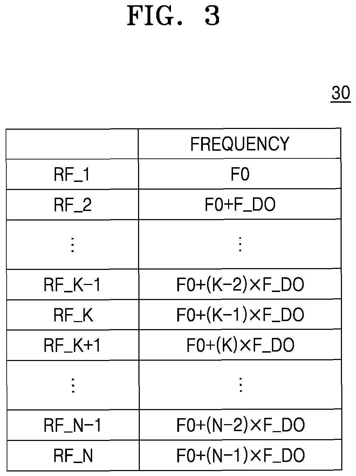

FIG. 3 is a diagram of a reference frequency list, according to an embodiment.

A reference frequency list 30 of FIG. 3 may be understood through the above description, and for the convenience of explanation, descriptions that are substantially the same as those given above may be omitted.

Referring to FIG. 3, the reference frequency list 30 may include N reference frequencies RF_1 to RF_N (N is an integer greater than or equal to 2). The N reference frequencies RF_1 to RF_N may be preset frequencies. A difference between the plurality of reference frequencies RF_1 to RF_N included in the reference frequency list 30 may be the same. The difference between the plurality of reference frequencies RF_1 to RF_N may be referred to as a frequency interval. Referring to FIG. 3, the difference between the plurality of reference frequencies RF_1 to RF_N may be the same as a search offset F_DO.

For example, referring to FIG. 3, the first reference frequency RF_1 may include FO and the second reference frequency RF_2 may include FO+F_DO. Therefore, the difference between the first reference frequency RF_1 and the second reference frequency RF_2 may include the search offset F_DO. Similarly, the difference between the K-1$^{th}$ reference frequency RF_K-1 and the K$^{th}$ reference frequency RF_K may include the search offset F_DO, wherein the difference between the K$^{th}$ reference frequency RF_K and the K+1$^{th}$ reference frequency RF_K+1 may also include the search offset F_DO. The search offset F_DO may be determined based on the number of reference frequencies and/or the frequency band used by the satellite (e.g., satellite 10 in FIG. 1). For example, the search offset F_DO may be 100 kHz. K is an integer of 1 or more. However, the disclosure is not limited thereto, and as such, the difference may be different from the search offset F_DO.

For the convenience of explanation, an embodiment of the disclosure is described assuming that the difference between two consecutive reference frequencies is the same as the search offset F_DO. However, the disclosure is not limited thereto, and as such, the difference between the reference frequencies according to an embodiment may not be constant. For example, a difference between the first reference frequency RF_1 and the second reference frequency RF_2 may be different from a difference between the second reference frequency RF_2 and the third reference frequency RF_3.

As described above, for each of the N reference frequencies RF_1 to RF_N included in the reference frequency list 30, the user equipment may generate a plurality of correlation values corresponding to each of the N reference frequencies, by correlating the received signal with the search signal. The user equipment may be the user equipment 20 in FIG. 2, and for the convenience of explanation, descriptions that are substantially the same as those given above may be omitted. The user equipment may determine the detection window that includes the largest correlation value or the reference frequency corresponding to the largest correlation value among all generated correlation values.

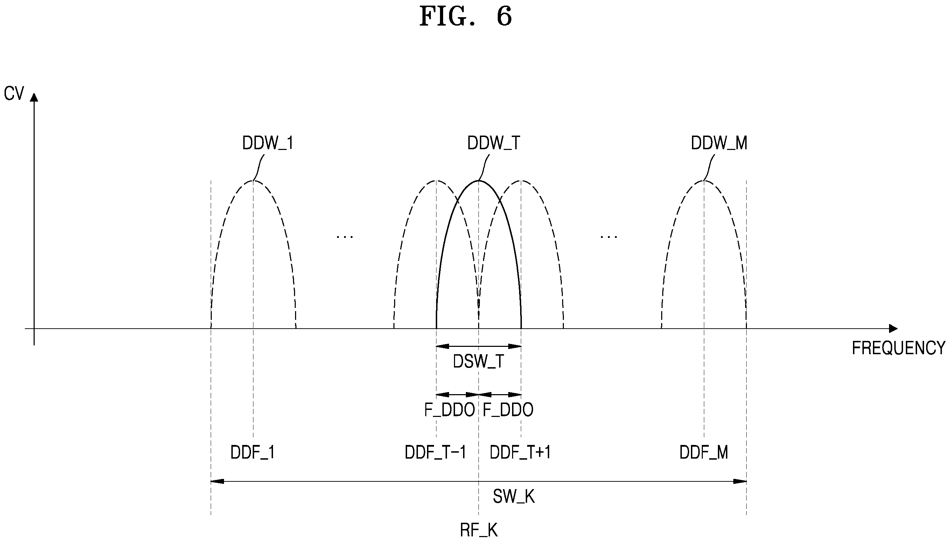

For example, the user equipment may generate a plurality of first correlation values, by correlating the received signal with the search signal, for the first reference frequency RF_1. The user equipment may generate a plurality of second correlation values, by correlating the received signal with the search signal, for the second reference frequency RF_2 having a difference from the first reference frequency RF_1 by the search offset F_DO. The above process may be repeated up to the N$^{th}$ reference frequency RF_N to generate the plurality of correlation values. The user equipment may select a reference frequency (e.g., K$^{th}$ reference frequency RF_K) corresponding to the largest correlation value among the plurality of generated correlation values. For example, the user equipment may select a reference frequency corresponding to the largest correlation value among the plurality of first correlation values and the plurality of second correlation values. However, the disclosure is not limited thereto, and as such, the user equipment may select a reference frequency corresponding to the largest correlation value among the plurality of first correlation values to the plurality of N$^{th}$ correlation values. The user equipment may identify the target frequency by performing the detailed frequency search for a surrounding frequency band of the reference frequency (e.g., K$^{th}$ reference frequency RF_K) corresponding to the largest correlation value. For example, the user equipment may determine a first detection window including the largest correlation value and may perform a detailed frequency search for the frequency band corresponding to the search width of the first detection window. Details on the detailed frequency search may be described below with reference to FIG. 6.

The user equipment, according to an embodiment of the disclosure, may generate the correlation values in order from the first reference frequency RF_1 to the Nth reference frequency RF_N, but the disclosure is not limited thereto.

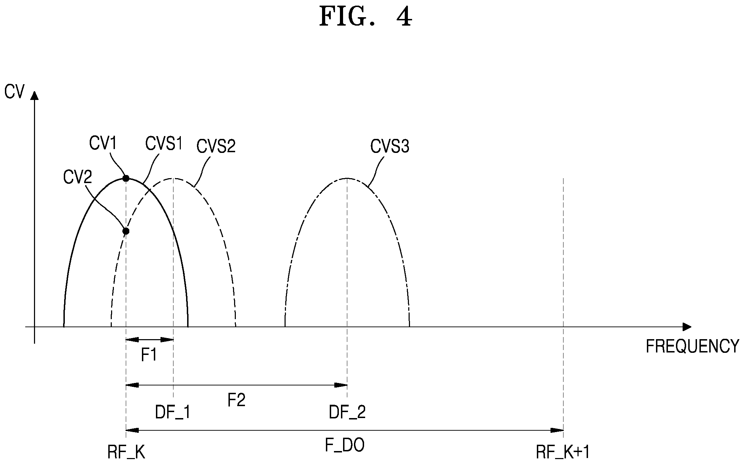

FIG. 4 is a diagram illustrating target frequency search, according to an embodiment.

The plurality of reference frequencies RF_K and RF_K+1 shown in FIG. 4 respectively correspond to the reference frequencies described above with reference to FIG. 3. As described above, to search for a target frequency, the user equipment must search the entire frequency band including the plurality of reference frequencies (RF_1 to RF_N in FIG. 3). However, for the convenience of explanation, referring to FIG. 4, it is described that the user equipment performs a search for a frequency band in the vicinity of the Kth reference frequency RF_K and the K+1th reference frequency RF_K+1.

FIG. 4 shows the user equipment searching for the target frequency in an example case in which the received signal received by the user equipment does not include the frequency offset. That is, the received signal may be the same as the shared signal transmitted by the satellite. However, the disclosure is not limited thereto, and as described above, the received signal may include the frequency offset.

Referring to FIG. 4, the satellite (e.g., satellite 10 in FIG. 1) may transmit the shared signal at the Kth reference frequency RF_K. However, since the received signal in FIG. 4 is assumed to not include the frequency offset according to an example case, the target frequency includes the Kth reference frequency RF_K.

Referring to FIG. 4, the user equipment may generate a plurality of correlation values (e.g., CV1 and CV2), by correlating the received signal with the shared signal, for each of the Kth reference frequency RF_K, a first search frequency DF_1 separated from the Kth reference frequency RF_K by a first frequency F1, and a second search frequency DF_2 separated from the Kth reference frequency RF_K by a second frequency F2.

For example, for the Kth reference frequency RF_K, the user equipment may generate a first correlation value group CVS1 by correlating the received signal with the shared signal. The first correlation value group CVS1 may include correlation values for the Kth reference frequency RF_K and correlation values for surrounding frequencies in the vicinity of the Kth reference frequencies RF_K. Similarly, the user equipment may generate a second correlation value group CVS2 and a third correlation value group CVS3, by correlating the received signal with the shared signal, for the first search frequency DF_1 and the second search frequency DF_2, respectively. The correlation values for the surrounding frequencies of the Kth reference frequency RF_K may be observed, as described above. However, in FIG. 4, for the convenience of explanation, it is described assuming that the correlation values between the received signal and the shared signal is observed only at the Kth reference frequency RF_K, that is, the target frequency.

Referring to FIG. 4, the user equipment may generate the first correlation value CV1 and the second correlation value CV2 at the Kth reference frequency RF_K. Since the received signal is present at the Kth reference frequency RF_K, the first correlation value CV1 is greater than the second correlation value CV2. Thus, the user equipment may identify the Kth reference frequency RF_K as the target frequency.

As the distance from the target frequency, that is, the Kth reference frequency RF_K, increases, the correlation values may decrease, and the correlation values for a frequency separated by more than a certain frequency may not be observed. For example, no correlation value may be observed for the second search frequency DF_2 separated from the Kth reference frequency RF_K by the second frequency F2. That is, the third correlation value group CVS3 may not include correlation values.

Referring to FIG. 4, for each of the Kth reference frequency RF_K, the first search frequency DF_1, and the second search frequency DF_2, the user equipment may generate the plurality of correlation values (e.g., CV1 and CV2) by correlating the received signal with the shared signal. The user equipment may determine a reference frequency (e.g., RF_K) corresponding to the largest correlation value (e. g., CV1) among the plurality of correlation values (e.g., CV1 and CV2). According to another embodiment, the user equipment may determine a correlation value group (e.g., CVS1) including the largest correlation value (e.g., CV1) among the plurality of correlation values (e.g., CV1 and CV2).

Although the shapes of the first correlation value group CVS1, the second correlation value group CVS2, and the third correlation value group CVS3 are shown to be similar to each other, the shapes of the first correlation value group CVS1, the second correlation value group CVS2, and the third correlation value group CVS3 may be different depending on the frequency. Additionally, the width of each of the first correlation value group CVS1, the second correlation value group CVS2, and the third correlation value group CVS3 may be different from one another. The width of each of the first correlation value group CVS1, the second correlation value group CVS2, and the third correlation value group CVS3 may vary depending on the signal and method for generating the correlation values.

For example, the user equipment may generate correlation values by correlating the received signal with the shared signal according to Equation 1 or Equation 2 below. In this case, the width of the correlation value group generated based on Equation 1 may be different from the width of the correlation value group generated based on Equation 2. For example, the width of the correlation value group generated based on Equation 2 may be greater than the width of the correlation value group generated based on Equation 1, for the shared signal and the received signal.

[Equation 1]

$$\{\widehat{f_e}, \widehat{\tau}\} = \arg\max_{f_e, \tau} \left| \sum_{l=0}^{L-1} \sum_{n=0}^{N-1} r_l[n - \tau] x_l^*[n] e^{\frac{j2\pi\widehat{f_e}(n+lN_s)}{f_s}} \right|^2$$

[Equation 2]

$$\{\hat{f}_e, \hat{\tau}\} = \arg\max_{\tilde{f}_e, \tilde{\tau}} \left| \sum_{l=0}^{L-1} \left( \sum_{n=0}^{N-1} r_l[n-\tilde{\tau}] x_l^*[n] e^{\frac{j2\pi\tilde{f}_e(n+lN_s)}{f_s}} \right) \left( \sum_{n=0}^{N-1} r_{l+1}[n-\tilde{\tau}] x_{l+1}^*[n] e^{\frac{j2\pi\tilde{f}_e(n+(l+1)N_s)}{f_s}} \right)^* \right|$$

In Equation 1 and Equation 2, $\hat{f}_e$ and $\hat{\tau}$ are a frequency offset estimate value and a time offset estimate value, respectively, and $\tilde{f}_e$ and $\tilde{\tau}$ are a frequency offset candidate and a time offset candidate, respectively. That is, each of the Kth reference frequency RF_K, the first search frequency DF_1, and the second search frequency DF_2, described above with reference to FIG. 4, may correspond to $\tilde{f}_e$ $x_l[n]$ refers to an $n$[th] sample of an $l$[th] symbol of the shared signal, $r_l[n]$ refers to an $n$[th] sample of an $l$[th] symbol of the received signal, $f_s$ refers to a sampling frequency, and $N_s$ refers to the number of samples included in one symbol, including a cyclic prefix (CP). The shared signal may be a signal shared between the satellite and the user equipment. The received signal may be a received signal by the user equipment. For example, the received signal may be distorted by the frequency offset.

However, the disclosure is not limited to the method of generating the correlation values based on the above-described Equation 1 and Equation 2. As such, according to another embodiment, the user equipment may generate correlation values between the received signal and the shared signal by using various metrics. In addition, the operation method of the user equipment according to an embodiment is not limited to generating the correlation values to search for the target frequency and may include various methods of generating values to search for the target frequency, in addition to the method of generating the correlation values.

As described above, the received signal received by the user equipment may include a frequency offset due to Doppler shifting or the like. Thus, although the satellite transmits the shared signal to the user equipment at the reference frequency, the received signal may be located at a distance by the frequency offset from the reference frequency. Thus, the user equipment may need to search for the target frequency by generating the correlation values for the reference frequency as well as the surrounding frequencies. As the width of the correlation value group narrows, the number of searches for the target frequency search may increase, thereby increasing the time required to search for the target frequency.

For example, as described above with reference to FIG. 3, the difference between the plurality of reference frequencies RF_1 to RF_N may be the same as the search offset (F_DO in FIG. 3). In this case, the search offset may have a value of 100 kHz. Considering the satellite signal band, the frequency offset may have a value of about -50 kHz to about 50 kHz. Therefore, the user equipment may need to search the entire frequency band in which the received signal may be present to search for the target frequency. In an example case in which the width of the correlation value group is small, the number of searches may increase, thereby increasing the time required to search for the target frequency.

The user equipment (e.g., the user equipment 20 in FIG. 1) according to an embodiment of the disclosure may reduce the number of searches by generating the search signal, thereby reducing the time required to search for the target frequency, despite the presence of the frequency offset. More specifically, the user equipment (e.g., the user equipment 20 in FIG. 1) may generate a detection window described below by correlating the search signal with the received signal. The detection window may include correlation values corresponding to the correlation value group described above. However, the detection window and the correlation value group are different in that the correlation values are generated by using the search signal instead of the shared signal. The detection window according to an embodiment of the disclosure may have a width greater than the width of the correlation value group generated based on the same received signal.

FIG. 5 is a diagram illustrating target frequency search, according to an embodiment.

The plurality of reference frequencies RF_K-1, RF_K and RF_K+1 shown in FIG. 5 correspond to the reference frequencies described above with reference to FIG. 3. The difference between the reference frequencies RF_K-1, RF_K and RF_K+1 may be the same as the search offset F_DO. However, the disclosure is not limited thereto. As such, according to an embodiment, the reference frequencies may have different frequency differences. As described above, the user equipment needs to search the entire frequency band including the plurality of reference frequencies (RF_1 to RF_N in FIG. 3) for the target frequency search. However, for the convenience of explanation, referring to FIG. 5, it is described that the user equipment searches a frequency band in the vicinity of the K-1th reference frequency RF_K-1, the Kth reference frequency RF_K, and the K+1th reference frequency RF_K+1.

Referring to FIG. 5, the user equipment according to an embodiment of the disclosure may generate a plurality of detection windows DW_K-1, DW_K, and DW_K+1 corresponding to the plurality of reference frequencies RF_K-1, RF_K, and RF_K+1, respectively. For example, the user equipment may generate the K-1th detection window DW_K-1 corresponding to the K-1th reference frequency RF_K-1, may generate the Kth detection window DW_K corresponding to the Kth reference frequency RF_K, and may generate the K+1th detection window DW_K+1 corresponding to the K+1th reference frequency RF_K+1.

Referring to FIG. 5, the K-1th detection window DW_K-1 may have the K-1th search width SW_K-1, the Kth

detection window DW_K may have the Kth search width SW_K, and the K+1th detection window DW_K+1 may have the K+1th search width SW_K+1. As described above, as the search width increases, the number of searches for the target frequency may decrease and the required search time may decrease.

The user equipment according to an embodiment of the disclosure may generate the search signal to generate the detection window with a wide search width. The user equipment may generate the plurality of correlation values by correlating the search signal with the received signal. For example, the search width of the detection window including the plurality of correlation values may be greater than the width of the correlation value group described above with reference to FIG. 4. That is, the user equipment may search a wider frequency band with a single search by correlating the search signal with the received signal, instead of the shared signal.

The user equipment according to an embodiment may generate a plurality of candidate search signals, and may determine a candidate search signal, among a plurality of candidate search signals, for which the search width of the detection window generated by correlation with the received signal is determined to be the best match as the search signal. Additionally, the user equipment according to an embodiment may generate the search signal based on a neural network. For example, the user equipment may generate the search signal configured to generate the detection window having a search width by using the shared signal as an input to the neural network. Additionally, the user equipment according to an embodiment may generate the search signal by linearly and/or non-linearly combining the shared signals in a frequency axis and/or a time axis.

The user equipment according to an embodiment may generate the search signal by linearly combining the candidate search signals according to Equation 3 below.

[Equation 3]

$$z_l[n] = \sum_{c=0}^{C-1} \alpha_c x_l[n] e^{\frac{-j2\pi f_c(n+lN_s)}{f_s}}$$

In Equation 3, $C$, $\alpha_c$, and $f_e$ may each be adjusted by the neural network or the user to generate the detection window with a search width as a design parameter. The other parameters of Equation 3 may be understood through Equation 1 and Equation 2 described above.

The method of generating the search signal, according to an embodiment of the disclosure, is not limited to the aforementioned examples. A search signal corresponding to the received signal may be generated through various methods, including changing and/or adding variables that generate correlation values.

Referring to FIG. 5, the user equipment according to an embodiment of the disclosure may generate the plurality of detection windows DW_K-1, DW_K, and DW_K+1 corresponding to the plurality of reference frequencies RF_K-1, RF_K, and RF_K+1, respectively. Specifically, the user equipment may generate the plurality of detection windows DW_K-1, DW_K, and DW_K+1 corresponding to the plurality of reference frequencies RF_K-1, RF_K, and RF_K+1, respectively, by correlating the search signal with the received signal. Although the correlation value group (e.g., CVS1) and the detection window (e.g., DW_K) shown in FIGS. 4 and 5 correspond to the same reference frequency (e.g., RF_K), the search width (e.g., SW_K) of the detection window (e.g., DW_K) is greater than the width of the correlation value group (e.g., CVS1). Therefore, the time required to search for the target frequency may be reduced when the user equipment searches for the target frequency using the detection window (e.g., DW_K), compared to when searching for the target frequency using the correlation value group (e.g., CVS1).

The user equipment according to an embodiment may generate a plurality of detection windows corresponding to a plurality of reference frequencies, respectively. The plurality of reference frequencies may be preset reference frequencies. Thus, the number of detection windows may be equal to the number of preset reference frequencies. However, the disclosure is not limited thereto. Referring to FIG. 5, based on three detection windows DW_K-1, DW_K, and DW_K+1 corresponding to three reference frequencies RF_K-1, RF_K, and RF_K+1, respectively, the user equipment may perform a target frequency search for a frequency band including the three reference frequencies RF_K-1, RF_K, and RF_K+1. However, the disclosure is not limited thereto, and as such, according to another embodiment, the user equipment may perform a target frequency search for a frequency band including a number of reference frequencies different than three reference frequencies. For example, based on the plurality of detection windows (e.g., N detection windows) respectively corresponding to the plurality of predefined reference frequencies (e.g., RF_1 to RF_N in FIG. 3), the user equipment may perform the target frequency search for the entire frequency band in which the target frequency may be present. That is, the user equipment according to an embodiment of the disclosure may generate N detection windows corresponding to the predefined N reference frequencies (e.g., RF_1 to RF_N in FIG. 3), respectively, based on the search signal, and the user equipment may perform the target frequency search for all frequency bands in which the received signal is present or may be present through the N detection windows.

The search width of the detection window according to an embodiment may be greater than or equal to a difference between reference frequencies. Referring to FIG. 5, each of the K-1th search width SW_K-1, the Kth search width SW_K, and the K+1th search width SW_K+1 may be greater than or equal to the search offset F_DO. Therefore, based on one detection window, the user equipment may search for the target frequency in the frequency band in the vicinity of the reference frequency corresponding to one detection window. According to an embodiment, one or more of the K-1th search width SW_K-1, the Kth search width SW_K, and the K+1th search width SW_K+1 may overlap with at least one of the other search widths. For example, as shown in FIG. 5, the Kth search width SW_K overlaps with the K-1th search width SW_K-1 and the K+1th search width SW_K+1.

The user equipment according to an embodiment of the disclosure may generate the plurality of correlation values and determine the detection window including the largest correlation value among the plurality of correlation values. Referring to FIG. 5, a target frequency TF may be located between the K-1th reference frequency RF_K-1 and the Kth reference frequency RF_K by the frequency offset, and may include a frequency closer to the Kth reference frequency RF_K than the K-1th reference frequency RF_K-1. In this case, the detection window having the largest correlation value may include the Kth detection window DW_K. The user equipment may determine that the target frequency TF is located within the search width SW_K of the Kth detection window DW_K. Therefore, the user equipment may further perform a detailed search operation (or referred to as a detailed frequency search operation) described below with reference to FIG. 6 in the frequency band corresponding to the search width SW_K of the Kth detection window DW_K.

FIG. 6 is a diagram illustrating target frequency search, according to an embodiment.

Referring to FIG. 6, the operation of the user equipment after selecting the detection window with the largest correlation value may be described below. The operation method of the user equipment in FIG. 6 may be understood with reference to the description given above with reference to FIG. 4.

The determined search width SW_K described above with reference to FIG. 5 may include M detailed frequencies DDF_1 to DDF_M. Here, M is an integer greater than or equal to 2. The plurality of detailed frequencies DDF_1 to DDF_M may have a constant frequency interval. For example, the difference between the plurality of detailed frequencies DDF_1 to DDF_M may be the same. For example, the difference between the plurality of detailed frequencies DDF_1 to DDF_M may include a detailed search offset F_DDO. However, the interval between the plurality of detailed frequencies DDF_1 to DDF_M according to the disclosure is not limited thereto. The difference between the plurality of detailed frequencies DDF_1 and DDFM may vary.

The user equipment according to an embodiment of the disclosure may generate the plurality of correlation values, by correlating the received signal with the shared signal, for M detailed frequencies DDF_1 to DDF_M.

Referring to FIG. 6, the user equipment may generate M detailed detection windows DDW_1 to DDW_M corresponding to M detailed frequencies DDF_1 to DDF_M, respectively. The detailed search width of each of M detailed frequencies DDF_1 to DDF_M may be less than the search width SW_K of the detection window (e.g., DW_K) described above with reference to FIG. 5. For example, the Tth detailed search width DSW_T of the Tth detailed detection window DDW_T is less than the Kth search width SW_K of the Kth detection window DW_K. Additionally, the detailed search width of each of M detailed frequencies DDF_1 to DDF_M may be the same, but the disclosure is not limited thereto.

Each of M detailed detection windows DDW_1 to DDW_M may correspond to the correlation value group described above with reference to FIG. 4. That is, the detailed detection window and the correlation value group according to an embodiment of the disclosure are common in that the detailed detection window and the correlation value group may include correlation values generated by correlating the received signal with the shared signal.

The user equipment according to an embodiment of the disclosure may search all ranges in which the received signal may be present, based on the detection window with a relatively wide search width, and may determine the frequency band subject to the detailed frequency search, based on the detection window including the largest correlation value. The frequency band subject to the detailed frequency search may correspond to the search width of the selected detection window. The user equipment may search a frequency band subject to the detailed frequency search, based on the detailed detection window. The detailed detection window may have less width but higher accuracy than the detection window. For example, at the frequency in which the target frequency is located, the detailed detection window may include correlation values greater than the detection window.

As shown in FIG. 6, the frequency band subject to the detailed frequency search may include the search width SW_K of the Kth detection window DW_K. However, the disclosure is not limited thereto. For example, the frequency band subject to a detailed frequency search may have a less width than the search width SW_K of the Kth detection window DW_K. As another example, the frequency band subject to the detailed frequency search may include a frequency band from an intermediate frequency between the Kth reference frequency RF_K and the K-1th reference frequency RF_K-1 to an intermediate frequency between the Kth reference frequency RF_K and K+1th reference frequency RF_K+1. As the other example, a frequency band subject to the detailed frequency search in which the Kth reference frequency RF_K is an intermediate frequency and the frequency band of which the width is the same as the search offset F_DO may be searched based on the plurality of detailed frequencies.

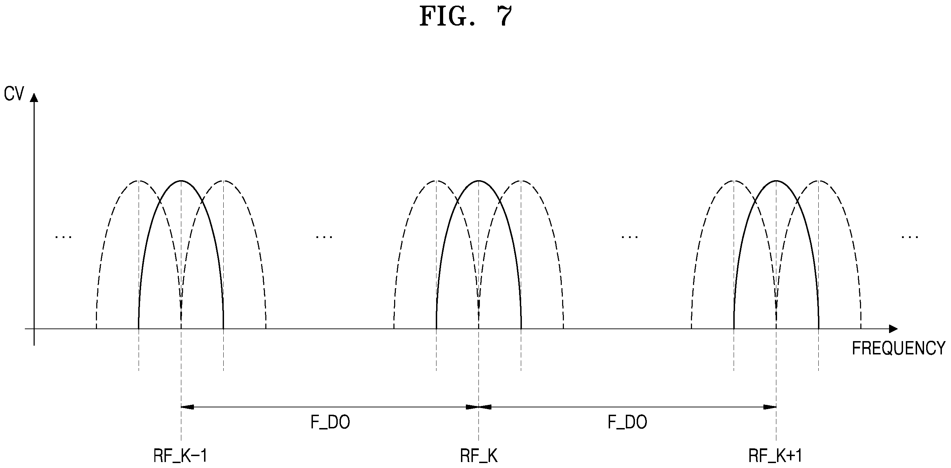

Referring to the foregoing, the user equipment according to an embodiment of the disclosure may first determine a specific frequency band in which the target signal may be present based on the detection window generated based on the search signal, and may perform the detailed frequency search only for the specific frequency band, thereby reducing the time required for the target frequency search, compared to when all ranges in which the received signal may be present are searched based on the detailed detection window (in the case of FIG. 7).

The user equipment according to an embodiment may determine the frequency band subject to the detailed frequency search, based on the detection window corresponding to some reference frequencies of the plurality of predefined reference frequencies. For example, the user equipment may sequentially or randomly generate the detection window corresponding to each of the plurality of predefined reference frequencies. In an example case in which the correlation values included in the generated detection window are greater than a preset threshold, the user equipment may determine the detection window including the correlation values greater than the threshold to determine the frequency band subject to the detailed frequency search. That is, the user equipment may not generate the detection window for all of the plurality of reference frequencies. The threshold may be set through machine learning or empirically.

FIG. 7 is a diagram illustrating target frequency search according to an embodiment.

FIG. 7 illustrates searching the entire frequency band only through the detailed detection window described above with reference to FIG. 6, without searching through the detection window described above with reference to FIG. 5.

FIG. 7 may be understood with reference to FIGS. 4 and 6 and descriptions that are substantially the same as those given above may be omitted.

Referring to FIGS. 6 and 7, the number of searches when searching for the target frequency through the detailed detection window from the K-1ᵗʰ reference frequency RF_K-1 to the K+1ᵗʰ reference frequency RF_K+1 may be greater than the number of searches when searching for the target frequency through the detection window described above with reference to FIG. 5.

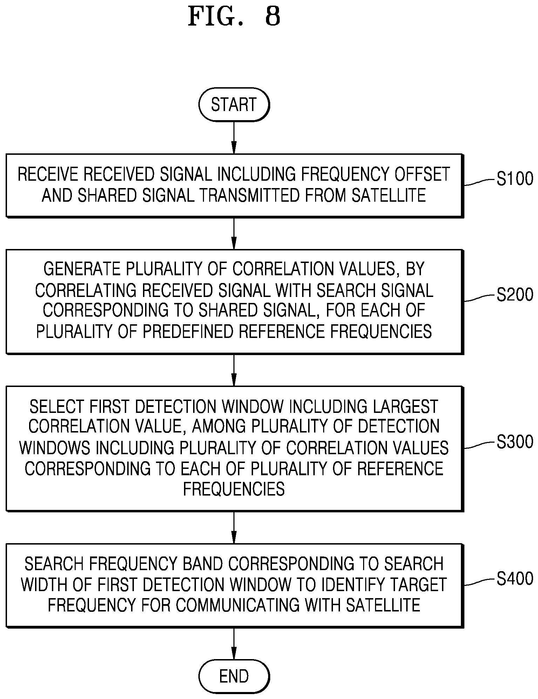

FIG. 8 is a flowchart illustrating an operation method of user equipment, according to an embodiment.

Referring to FIG. 8, in operation S100, the method may include receiving a signal including an frequency offset and a shared signal. For example, the user equipment may receive a signal including the frequency offset and the shared signal transmitted from the satellite. The signal received by the user equipment may be referred to as a received signal.

In operation S200, the method may include generating a plurality of correlation values based on the received signal and the shared signal. For example, the user equipment may generate the plurality of correlation values, by correlating the received signal with a search signal corresponding to the shared signal, for each of the plurality of reference frequencies. The plurality of reference frequencies may be predefined reference frequencies, which have a constant frequency interval. That is, the plurality of reference frequencies may be spaced apart from each other at a regular interval in the frequency axis.

In operation S300, the method may include selecting a first detection window including the largest correlation value, among a plurality of detection windows including the plurality of correlation values corresponding to each of the plurality of reference frequencies. For example, the user equipment may select a first detection window including the largest correlation value, among a plurality of detection windows including the plurality of correlation values corresponding to each of the plurality of reference frequencies. The number of detection windows according to an embodiment may be the same as the number of predefined reference frequencies. Additionally, the width of the first detection window according to an embodiment may be greater than or equal to the difference between reference frequencies. The sum of the search widths of the plurality of detection windows according to an embodiment may include an entire frequency band including the plurality of reference frequencies. That is, the user equipment may search the entire frequency band in which the target frequency may be present through the plurality of detection windows.

In operation S400, the method may include searching the frequency band corresponding to the search width of the first detection window to identify the target frequency for communicating with the satellite. For example, the user equipment may search the frequency band corresponding to the search width of the first detection window to identify the target frequency for communicating with the satellite.

As described above, the frequency band according to the embodiment may be less than or equal to the search width of the first detection window.

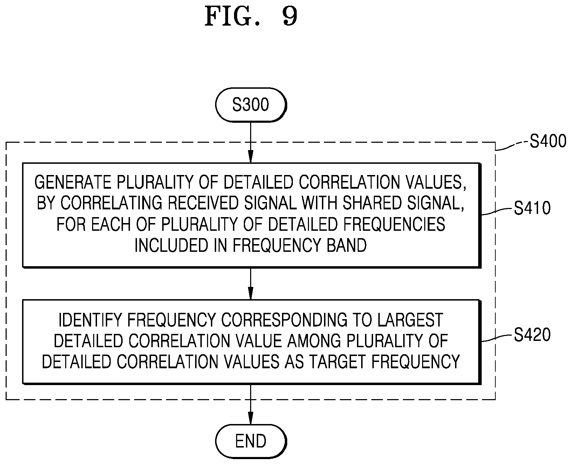

FIG. 9 is a flowchart illustrating an operation method of user equipment, according to an embodiment.

Referring to FIG. 9, operation S410 and operation S420 may be included in operation S400 described above with reference to FIG. 8.

In operation S410, the user equipment may generate the plurality of detailed correlation values, by correlating the received signal with the shared signal, for each of the plurality of detailed frequencies included in the frequency band.

In operation S420, the user equipment may identify the frequency corresponding to the largest detailed correlation value among the plurality of detailed correlation values as the target frequency.

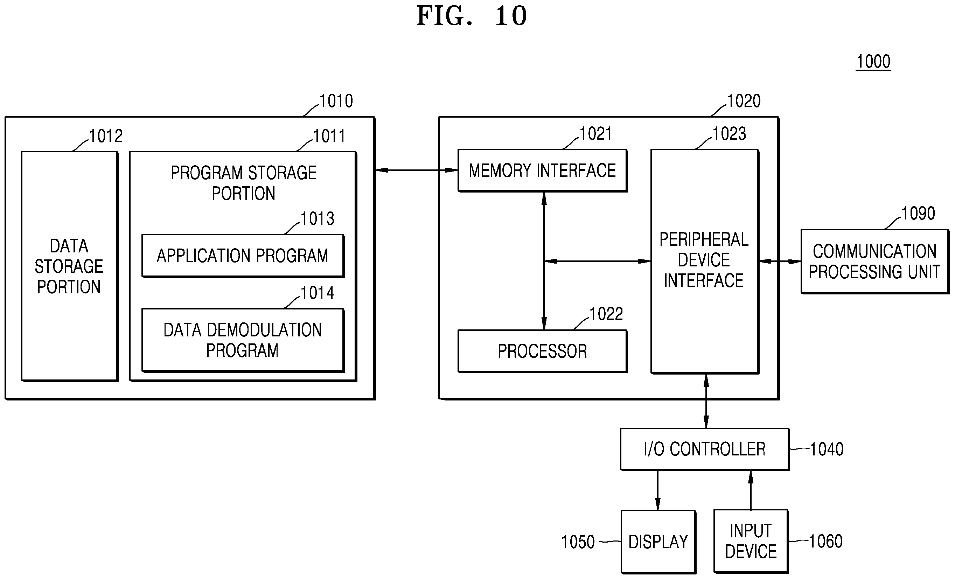

FIG. 10 is a block diagram illustrating an electronic device, according to an embodiment.

Referring to FIG. 10, the electronic device 1000 may include a memory 1010, a processor 1020, an input/output (I/O) controller 1040, a display 1050, an input device 1060, and a communication processing unit 1090. However, the disclosure is not limited thereto, and as such, one or more components may be added to or omitted from the structure of the electronic device 1000 illustrated in FIG. 10. According to an embodiment, the electronic device 1000 may include a plurality of memories 1010.

The memory 1010 may include a program storage portion 1011 that stores programs for controlling operation of the electronic device 1000 and a data storage portion 1012 that stores data generated during program execution. The data storage portion 1012 may store data necessary for operation of an application program 1013 and/or a data demodulation program 1014 or may store data generated from operation of the application program 1013 and the data demodulation program 1014. However, the disclosure is not limited thereto, and as such, according to an embodiment, the data storage portion 1012 may store software code, computer instructions or application programs, and/or store data generated from operation of the software code, computer instructions or application programs.

The program storage portion 1011 may include the application program 1013. The program included in the program storage portion 1011 may be represented by an instruction set as a set of instructions. The application program 1013 may include program codes for executing various applications operating on the electronic device 1000. That is, the application program 1013 may include codes (or commands) relating to various applications driven by a processor 1022.

The electronic device 1000 may include a communication processing unit 1090 that performs communication functions for voice communication and data communication. A peripheral device interface 1023 may control the connection between the I/O controller 1040, the communication processing unit 1090, the processor 1022, and a memory interface 1021. The processor 1022 may control a plurality of base stations to provide the corresponding services by using at least one software program. The processor 1022 may execute at least one program stored in the memory 1010 to provide a service corresponding to the program.

The communication processing unit 1090 may perform the target frequency search operation described with reference to FIGS. 1 to 9. For example, to initially access the satellite, the communication processing unit 1090 may determine a frequency band subject to the detailed frequency search by correlating the shared signal with the received signal received from the satellite. The communication processing unit 1090 may reduce the number of searches required for the target frequency search by performing the detailed frequency search on the determined frequency band. For example, the communication processing unit 1090 may perform the detailed frequency search only on the determined frequency band. Thus, the time taken for the target frequency search may be reduced.

The I/O controller 1040 may provide an interface between an I/O device, such as the display 1050 and the input device 1060, and the peripheral device interface 1023. The display 1050 displays state information, input characters, moving pictures, still pictures, and the like. For example, the display 1050 may display application program information, driven by the processor 1022.

The input device 1060 may provide input data generated by selection of the electronic device 1000 to the processor unit 1020 through the I/O controller 1040. The input device 1060 may include a keypad including at least one hardware button, a touchpad for sensing touch information, and the like. For example, the input device 1060 may provide the touch information, such as touch, touch movement, and touch release, detected by the touchpad to the processor 1022 through the I/O controller 1040.

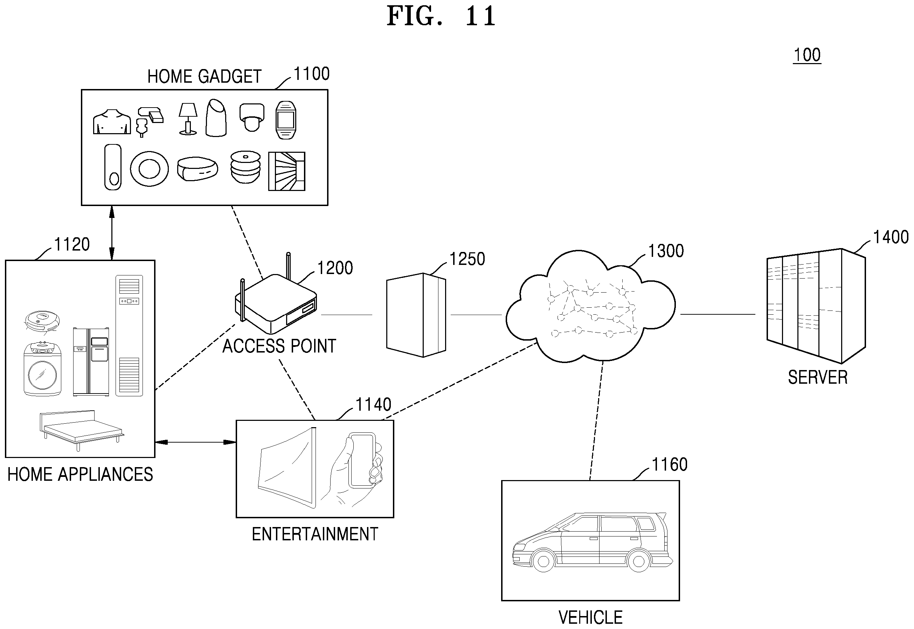

FIG. 11 is a conceptual diagram illustrating an Internet of things (IoT) network system to which an embodiment is applied.

Referring to FIG. 11, the IoT network system 100 may include a plurality of IoT devices 1100, 1120, 1140, and 1160, an AP 1200, a gateway 1250, a wireless network 1300, and a server 1400. The Internet of things (IoT) may refer to a network between objects using wired/wireless communication.

Each of the IoT devices 1100, 1120, 1140, and 1160 may form a group according to a characteristic of each IoT device. For example, the IoT devices 1100, 1120, 1140, and 1160 may be grouped into a home gadget 1100, a home appliance 1120, an entertainment 1140, and a vehicle 1160. Some of the plurality of IoT devices 1100, 1120, and 1140 may be connected to a communications network or to another IoT device via the AP 1200. The AP 1200 may be embedded in one IoT device. The gateway 1250 may change the protocol to connect the AP 1200 to an external wireless network. The IoT devices 1100, 1120, 1140 may be connected to the external communication network via the gateway 1250. The wireless network 1300 may include the Internet and/or a public network. The plurality of IoT devices 1100, 1120, 1140, and 1160 may be connected via the wireless network 1300 to the server 1400 that provides a certain service, and a user may utilize the service via at least one of the plurality of IoT devices 1100, 1120, 11140, and 1160. Additionally, the wireless network 1300 may include a satellite according to an embodiment of the disclosure. The satellite may be the satellite 10 in FIG. 1, and for the convenience of explanation, descriptions that are substantially the same as those given above may be omitted.

The wireless network 1300 including the satellite according to an embodiment of the disclosure may directly communicate with each of the entertainment 1140 and the vehicle 1160. The user equipment (e.g., user equipment 20 in FIG. 1) described above may include the entertainment 1140 or the vehicle 1160. The vehicle 1160 is not limited to a car shown in FIG. 11 and may be understood to include a ship and aircraft. Additionally, the vehicle 1160 may be understood to further include agricultural equipment and the like. That is, the vehicle 1160 may include a device located in or passing through the shaded area of the cellular system.

Thus, each of the entertainment 1140 and the vehicle 1160 may perform the frequency search operations described above to access the wireless network 1300, which includes the satellite. Each of the entertainment 1140 and the vehicle 1160 may generate the detection window having the relatively wide search width based on the search signal and the received signal received from the satellite to search for the target frequency. The entertainment 1140 or the vehicle 1160 may each perform the detailed search operation for the frequency band corresponding to the search width of the detection window that includes the largest correlation value. Each of the entertainment 1140 and the vehicle 1160 may perform the detailed search operation only for the frequency band based on the received signal and the shared signal, thereby reducing the time required for the target frequency search and the number of searches.

In accordance with embodiments, the plurality of IoT devices 1100, 1120, 1140, and 1160 may perform the target frequency search operations described above with reference to FIGS. 1 to 9 and attempt an initial access to a cell based thereon. As a result, the time required for the target frequency search is reduced, thereby reducing power consumption of the electronic device 1000 and improving the performance the electronic device 1000.

While the disclosure has been particularly shown and described with reference to embodiments thereof, it will be understood that various changes in form and details may be made therein without departing from the scope of the following claims.

## Claims

1. An operation method of user equipment, the operation method comprising:

   receiving a signal from a satellite, the received signal comprising a frequency offset and a shared signal;
   generating, for each of a plurality of reference frequencies, a plurality of correlation values based on a search signal corresponding to the shared signal and the received signal;
   selecting a first detection window, among a plurality of detection windows comprising the plurality of correlation values corresponding to each of the plurality of reference frequencies, the first detection window comprising a largest correlation value among the plurality of correlation values corresponding to each of the plurality of reference frequencies; and
   identifying a target frequency for communicating with the satellite by searching a frequency band based on the first detection window.

2. The operation method of claim 1, wherein a search width of the first detection window is greater than or equal to a difference between the plurality of reference frequencies.

3. The operation method of claim 1 or 2, wherein the frequency band is less than or equal to a search width of the first detection window.

4. The operation method of any preceding claim, wherein a number of the plurality of reference frequencies is the same as a number of the plurality of detection windows.

5. The operation method of any preceding claim, wherein the plurality of reference frequencies are spaced apart from each other at a regular frequency interval.

6. The operation method of any preceding claim, wherein the plurality of detection windows correspond to the plurality of reference frequencies, respectively, and
   a sum of search widths of the plurality of detection windows comprises an entire frequency band comprising the plurality of reference frequencies.

7. The operation method of any preceding claim, wherein the search signal is generated based on the shared signal.

8. The operation method of any preceding claim, wherein the identifying of the target frequency comprises:

   generating a plurality of detailed correlation values, by correlating the received signal with the shared signal, for each of a plurality of sub-frequencies included in the frequency band; and
   identifying a frequency corresponding to a largest detailed correlation value among the plurality of detailed correlation values as the target frequency.

9. User equipment comprising:

a transceiver configured to receive a signal from a satellite, the received signal comprising a frequency offset and a shared signal;

a memory configured to store a plurality of reference frequencies; and

a processor configured to:

generate, for each of a plurality of reference frequencies, a plurality of correlation values based on a search signal corresponding to the shared signal and the received signal, and

identify a target frequency for communication with the satellite by searching a frequency band based on a first detection window, among a plurality of detection windows comprising a plurality of correlation values corresponding to each of the plurality of reference frequencies, the first detection window comprising a largest correlation value among the plurality of correlation values corresponding to each of the plurality of reference frequencies.

10. The user equipment of claim 9, wherein a search width of the first detection window is greater than or equal to a difference between the plurality of reference frequencies.

11. The user equipment of claim 9 or 10, wherein the processor is further configured to:

generate a plurality of detailed correlation values, by correlating the received signal with the shared signal, for each of a plurality of sub-frequencies included in the frequency band, and

identify a frequency corresponding to a largest detailed correlation value among the plurality of detailed correlation values as the target frequency.

12. An operation method of user equipment comprising:

receiving a signal from a satellite, the received signal comprising a frequency offset and a shared signal;

generating a search signal configured such that a search width of a detection window generated by correlation with the received signal is equal to or greater than a frequency interval between a plurality of preset reference frequencies;

generating, for each of a plurality of reference frequencies, a plurality of correlation values, by correlating the search signal with the received signal;

selecting a first detection window, among a plurality of detection windows comprising the plurality of correlation values corresponding to each of the plurality of reference frequencies, the first detection window comprising a largest correlation value among the plurality of correlation values corresponding to each of the plurality of reference frequencies;

determining a frequency band based on a first reference frequency corresponding to the first detection window and an adjacent reference frequency; and

identifying a target frequency for communicating with the satellite by searching the frequency band.

13. The operation method of claim 12, wherein the generating of the search signal comprises generating the search signal based on the shared signal.

14. The operation method of claim 12 or 13, wherein the frequency band comprises a search width of the first detection window.

15. The operation method of claim 12, 13 or 14, further comprising:

generating a plurality of detailed correlation values, by correlating the received signal with the shared signal, for each of a plurality of sub-frequencies included in the frequency band; and

identifying a frequency corresponding to a largest detailed correlation value among the plurality of detailed correlation values as the target frequency.

# FIG. 1

# FIG. 2

# FIG. 3

30

| | FREQUENCY |
|---|---|
| RF_1 | F0 |
| RF_2 | F0+F_DO |
| ⋮ | ⋮ |
| RF_K−1 | F0+(K−2)×F_DO |
| RF_K | F0+(K−1)×F_DO |
| RF_K+1 | F0+(K)×F_DO |
| ⋮ | ⋮ |
| RF_N−1 | F0+(N−2)×F_DO |
| RF_N | F0+(N−1)×F_DO |

FIG. 4

FIG. 5

EP 4 604 417 A1

# FIG. 6

# FIG. 7

EP 4 604 417 A1

# FIG. 8

START

RECEIVE RECEIVED SIGNAL INCLUDING FREQUENCY OFFSET AND SHARED SIGNAL TRANSMITTED FROM SATELLITE —S100

GENERATE PLURALITY OF CORRELATION VALUES, BY CORRELATING RECEIVED SIGNAL WITH SEARCH SIGNAL CORRESPONDING TO SHARED SIGNAL, FOR EACH OF PLURALITY OF PREDEFINED REFERENCE FREQUENCIES —S200

SELECT FIRST DETECTION WINDOW INCLUDING LARGEST CORRELATION VALUE, AMONG PLURALITY OF DETECTION WINDOWS INCLUDING PLURALITY OF CORRELATION VALUES CORRESPONDING TO EACH OF PLURALITY OF REFERENCE FREQUENCIES —S300

SEARCH FREQUENCY BAND CORRESPONDING TO SEARCH WIDTH OF FIRST DETECTION WINDOW TO IDENTIFY TARGET FREQUENCY FOR COMMUNICATING WITH SATELLITE —S400

END

# FIG. 9

S300

S400

GENERATE PLURALITY OF DETAILED CORRELATION VALUES, BY CORRELATING RECEIVED SIGNAL WITH SHARED SIGNAL, FOR EACH OF PLURALITY OF DETAILED FREQUENCIES INCLUDED IN FREQUENCY BAND

S410

IDENTIFY FREQUENCY CORRESPONDING TO LARGEST DETAILED CORRELATION VALUE AMONG PLURALITY OF DETAILED CORRELATION VALUES AS TARGET FREQUENCY

S420

END

# FIG. 10

DATA STORAGE PORTION (1012)

PROGRAM STORAGE PORTION (1011)
- APPLICATION PROGRAM (1013)
- DATA DEMODULATION PROGRAM (1014)

(1010)

MEMORY INTERFACE (1021)

PROCESSOR (1022)

PERIPHERAL DEVICE INTERFACE (1023)

(1020)

COMMUNICATION PROCESSING UNIT (1090)

I/O CONTROLLER (1040)

DISPLAY (1050)

INPUT DEVICE (1060)

1000

EP 4 604 417 A1

# FIG. 11

HOME GADGET —1100

1120

HOME APPLIANCES

1200
ACCESS POINT

1250

1140
ENTERTAINMENT

1300

1160
VEHICLE

1400
SERVER

100

EP 4 604 417 A1

Europäisches
Patentamt

European
Patent Office

Office européen
des brevets

# EUROPEAN SEARCH REPORT

**Application Number**

EP 25 15 5611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/224726 A1 (QUALCOMM INC [US]) 23 November 2023 (2023-11-23) * abstract * * paragraph [0157] - paragraph [0175] * * figures 10-16 * | 1-15 | INV. H04B7/185 |
| A | HUAWEI ET AL: "Evaluation of DL synchronization and central frequency tracking for NTN", 3GPP DRAFT; R1-1903201, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 16 February 2019 (2019-02-16), XP051600896, Retrieved from the Internet: URL:http://www.3gpp.org/ftp/tsg%5Fran/WG1%5FRL1/TSGR1%5F96/Docs/R1%2D1903201%2Ezip [retrieved on 2019-02-16] * sections 2, 3 * | 1-15 | |
| A | LIU YUN ET AL: "The Time-Frequency Synchronization for 5G NR Based Non-Terrestrial Networks", 2021 IEEE 21ST INTERNATIONAL CONFERENCE ON COMMUNICATION TECHNOLOGY (ICCT), IEEE, 13 October 2021 (2021-10-13), pages 587-591, XP033995507, DOI: 10.1109/ICCT52962.2021.9658095 [retrieved on 2021-12-20] * abstract * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 24 June 2025 | Garrammone, Giuliano |

EPO FORM 1503 03.82 (P04C01)

## ANNEX TO THE EUROPEAN SEARCH REPORT
## ON EUROPEAN PATENT APPLICATION NO.

EP 25 15 5611

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| WO 2023224726 A1 | 23-11-2023 | CN 119156783 A | 17-12-2024 |
| | | EP 4527025 A1 | 26-03-2025 |
| | | JP 2025518508 A | 17-06-2025 |
| | | KR 20250008509 A | 14-01-2025 |
| | | TW 202348068 A | 01-12-2023 |
| | | WO 2023224726 A1 | 23-11-2023 |

EPO FORM P0459

For more details about this annex : see Official Journal of the European Patent Office, No. 12/82